# EUROPEAN PATENT SPECIFICATION

(11) **EP 1 773 957 B1**
(45) Date of publication and mention of the grant of the patent: **05.08.2009**
(21) Application number: 05812015.5
(22) Date of filing: 23.06.2005
(51) Int. Cl.: C09D 175/04, C09D 123/28, C08J 7/04

(54) **Method of refinishing aged surfaces using chlorinated polyolefin/ polyurethane coatings**
Verfahren zur Nachbehandlung gealterter Oberflächen mittels chlorierter Polyolefin/ Polyurethan Beschichtungen
Méthode de traitement de surfaces usées à l'aide d'un revêtement à base de polyoléfine chlorée et de polyuréthanne

(30) Priority: 30.06.2004 US 882884
(43) Date of publication of application: 18.04.2007
(73) Proprietor: PRC-DESOTO INTERNATIONAL, INC., Glendale, CA 91203 (US)
(72) Inventor: CONNELLY, Bruce, A., Gibsonia, PA 15044 (US); SAWANT, Suresh, G., Stevenson Ranch, CA 91381 (US); AKLIAN, Jak, H., North Hollywood, CA 91606 (US); TERAN, Ivan, J., Hawthorne, CA 90250 (US)
(74) Representative: Polypatent
(86) International application number: PCT/US2005/022399
(87) International publication number: WO 2006/025925

(56) References cited:
- EP-A- 0 238 702
- US-A- 5 258 444
- US-A- 5 453 300
- DATABASE WPI Section Ch, Week 199308 Derwent Publications Ltd., London, GB; Class A17, AN 1993-061067 XP002365780 & JP 05 007832 A (FUJIKURA KASEI KK) 19 January 1993 (1993-01-19)
- DATABASE WPI Section Ch, Week 198421 Derwent Publications Ltd., London, GB; Class A17, AN 1984-129446 XP002365781 & JP 58 173134 A (ASAHI PEN KK) 12 October 1983 (1983-10-12)

## Description

This disclosure relates to a method of refinishing aged coatings by applying compositions comprising at least one chlorinated polyolefin.

During use, a surface can age. The term "aged surface" as used herein refers to a surface whose physical and/or chemical properties are degraded compared to those of the new surface. Aging of surfaces can result from the effects of, for example, mechanical abrasion, impact, water, solvents, temperature, radiation, moisture, weathering and/or other mechanisms that cause degradation of the physical and chemical properties as well as the aesthetic qualities of a surface. "Aged surface" also includes surfaces that are degraded from their initially applied condition, wherein the degradation results from a brief exposure to a stress, as compared to aging which can result from long term exposure to one or more stress condition. For example, a surface can become damaged by mechanical means such as abrasion, impact, and the like, exposure to stress such as that induced by mechanical, and/or thermal means, exposure to excessive temperatures, exposure to solvents, exposure to irradiation, and the like. In practice, it can be useful to refinish an aged surface to restore the physical, chemical, and/or aesthetic qualities of the surface.

Surfaces can include for example, coatings, metal surfaces, or polymer surfaces. Coatings can comprise multiple coating layers to achieve certain intended characteristics. For example, primer coatings can be applied to metallic surfaces for enhanced corrosion resistance or to polymeric surfaces to enhance the adhesion of subsequently applied layers, while topcoats can be selected to achieve properties such as solvent resistance, weatherability, abrasion resistance, hardness, and/or aesthetics. Coatings have been developed with enhanced adhesion characteristics to surfaces and coating layers. In some cases, the main function of the coating, such as a primer, or tie coat, can be to provide adhesion between opposing coating layers. Aviation and aerospace vehicles are often first coated with a primer based on epoxy resin or polyurethane and a curing agent, and overcoated with a curable polyurethane topcoat which is resistant to water and organic solvents such as aviation fuel and hydraulic fluids.

Adhesion between individual coating layers and between the substrate and a layer coated on a substrate can contribute to the overall performance of the coating. When a part is first coated, the quality of the coating can exhibit the same or similar physical and chemical properties across the surface. However, for example, on used, aged, and/or damaged surfaces, and particularly for large surfaces such as an aircraft, a surface to be coated and/or refinished may not be homogeneous.

When a large surface such as that of an aircraft is to be refinished, the topcoat can be removed using a stripper before repainting. To avoid having to pre-treat a fresh metallic surface and reapply a new primer coating, it can be useful to only remove the topcoat layer before repainting. Swellable, strippable topcoats and processes for removing a topcoat while leaving a cured primer coating on a metallic surface are disclosed in U.S. Patent No. 6,217,945, incorporated herein by reference. Although methods and compositions have been developed for selectively removing, or stripping, a topcoat while leaving a cured primer coating intact and adhering to a metallic substrate surface, the cured primer coating must first be prepared prior to application of a new topcoat to facilitate adequate adhesion of the topcoat to the cured primer coating.

In certain applications, it can be useful to apply a polyurethane topcoat to an aged surface such as an aged coating without first removing the aged coating. However, adhesion of polyurethane coatings to aged coatings is generally poor. Surface phenomena of the aged coating, such as chalking, the presence of surface micropores, and entrapped water can contribute to the poor adhesion of new polyurethane topcoats to an aged coating.

To facilitate and/or enhance the adhesion of a polyurethane topcoat to an aged surface, the aged surface can be mechanically abraded prior to applying the polyurethane topcoat. Mechanical abrasion of an aged surface can be accomplished by, for example, sanding. Sanding large surfaces, such as those of an aircraft, can be costly, time consuming, and difficult to control to the extent necessary to facilitate uniform adhesion of a newly applied topcoat. Furthermore, the process of mechanical abrasion can release particulates comprising potentially harmful and/or toxic chemicals.

It is therefore useful to provide an alternative method to mechanical abrasion for enhancing adhesion of polyurethane topcoats to aged surfaces.

A method of refinishing an aged coating according to claim 1 is provided.

Unless otherwise indicated, all numbers expressing quantities of ingredients, reaction conditions, and so forth used in the specification and claims are to be understood as being modified in all instances by the term "about." Accordingly, unless indicated to the contrary, the numerical parameters set forth herein are approximations that can vary depending upon the desired properties to be obtained.

In this application, the use of the singular includes the plural unless specifically stated otherwise. In this application, the use of "or" means "and/or" unless stated otherwise. Furthermore, the use of the term "including," as well as other forms, such as "includes" and "included," is not limiting.

It can be useful that coatings used to finish and refinish certain surfaces, such as aircraft surfaces, exhibit hardness, resistance to water and solvents, be easy to apply, and result in films having high gloss. Coating compositions comprising a hydroxyl-functional polymer such as a polyester or acrylic polymer and a polyisocyanate can be used for these applications. Two-component polyurethane coating compositions can comprise an organic polyisocyanate in one component, sometimes referred to herein as the "isocyanate component," and a hydroxyl-containing polymer such as a polyester polyol, a polyether polyol or hydroxyl-containing acrylic polymer in another component. This component is sometimes referred to herein as the "polyol component." The two components are maintained separate until immediately prior to application. After application, the polyisocyanate and polymeric polyol react to form a cured polyurethane coating. The reaction between the hydroxyl-functional polymer and the polyisocyanate can occur at room temperature, and catalysts can be added to speed the reaction. Other constituents such as pigments, solvents, catalysts, additives, and the like can be formulated into either of the two components. Two-component polyurethane coatings and adhesives are known (see U.S. patent No. 4,341,689, for example) and are commercially available. An example of a commercially available two-component polyurethane coating composition is DESOTHANE CA 2000 (PRC-DeSoto International, Inc., Burbank, CA).

Single-component moisture curing polyurethane compositions can also be used to produce high quality coatings. Moisture curing polyurethane polymers can be prepared by reacting a stoichiometric excess of an organic polyisocyanate with a polymeric polyol, such as a polyester polyol, a polyether polyol or a hydroxyl-containing acrylic polymer to form a polyisocyanate polymer. The polyisocyanate polymer can be formulated with solvents, pigments, additives, and the like to form the coating composition. An example of a commercially available moisture-cured polyurethane coating is DESMODUR E polyisocyanate (Bayer Corporation, Pittsburgh, PA).

Two-component and single-component polyurethane coating compositions can be provided as either an aqueous-based or organic solvent-based formulation. In certain embodiments, the organic solvent can be an aliphatic or aromatic hydrocarbon such as toluene or xylene, an alcohol such as butanol or isopropanol, an ester such as butyl acetate or ethyl acetate, a ketone such as acetone, methyl isobutyl ketone, or methyl ethyl ketone, an ether, an ether-alcohol or an ether-ester, or a mixture of any of the foregoing. A polyurethane coating composition can comprise a single type of polyurethane polymer, or can comprise a mixture of different types of polyurethane polymers.

To provide a curable polyurethane coating with enhanced adhesion to an aged surface, at least one chlorinated polyolefin can be added to an aqueous- or solvent-based curable polyurethane coating composition. In certain embodiments, the amount of chlorinated polyolefin in the curable polyurethane coating composition can range from 1 weight percent to 10 weight percent of the composition, and in certain embodiments, can range from 2.5 weight percent to 5 weight percent, with the percentages based on the total weight of resin solids comprising the composition.

Any chlorinated polyolefin can be included in the polyurethane coating composition, such as grafted chlorinated polyolefins, non-grafted chlorinated polyolefms, modified chlorinated polyolefins, unmodified chlorinated polyolefins, chlorinated polypropylene, chlorinated polybutene, chlorinated polyethylene, and mixtures thereof. Chlorinated polyolefin polymers can have weight average molecular weights ranging from 5,000 Daltons to 200,000 Daltons, and in certain embodiments ranging from 10,000 Daltons to 40,000 Daltons as determined by gel permeation chromatography using a polystyrene standard. In certain embodiments, a chlorinated polyolefin polymer can be a chlorosulfonated olefin polymer or a blend of a chlorinated polyolefin polymer with a chlorosulfonated olefin polymer, where chlorosulfonation can be accomplished by reacting a grafted or non-grafted polyolefin with a chlorosulfonating agent.

Non-grafted olefin polymers for chlorination can be homopolymers of α-monoolefins having 2 to 8 carbon atoms, or copolymers of ethylene and at least one ethylenically unsaturated monomer such as α-monoolefins having 3 to 10 carbon atoms, alkyl esters having 1 to 12 carbon atoms of unsaturated monocarboxylic acids having 3 to 20 carbon atoms, and unsaturated mono- or di-carboxylic acids having 3 to 20 carbon atoms, and vinyl esters of saturated carboxylic acids having 2 to 18 carbon atoms.

Graft copolymer based resins can be reaction products of a α-olefin polymer and a grafting agent. An alpha-olefin homopolymer of one or copolymer of two α-olefin monomers having 2 to 8 carbon atoms includes homopolymers such as, but not limited to, polyethylene and polypropylene, and copolymers such as ethylene/propylene copolymers, ethylene/1-butene copolymers, ethylene/4-methyl-1-pentene copolymers, ethylene/1-hexene copolymers, ethylene/1-butene/1-octene copolymers, ethylene/1-decene copolymers, ethylene/4-ethyl-1-hexene copolymers, and ethylene/4-ethyl-1-octene copolymers. A chlorinated grafted polypropylene can be prepared by solution chlorination of a graft-modified polypropylene homopolymer or propylene/α-olefin copolymer. Grafting polymerization can be accomplished in the presence of a free radical catalyst in a solvent which is inert to chlorination. Fluorobenzene, chlorofluorobenzene, carbon tetrachloride, chloroform, and the like are useful solvents. In certain embodiments, grafted polypropylenes can be base resins that have been grafted with an α, β-unsaturated anhydride to form an acid- and/or anhydride-modified chlorinated polyolefin. Examples of grafting agents include maleic acid, maleic anhydride, fumaric acid, and the like.

In certain embodiments, a chlorinated polyolefin can include a grafted acrylic chlorinated polyolefin. In certain embodiments, the grafted acrylic component can range from 10 weight percent to 90 weight percent of the total weight of the grafted acrylic chlorinated polyolefin. In certain embodiments, the grafted acrylic component can comprise from 30 weight percent to 60 weight percent of the total weight of the grafted acrylic chlorinated polyolefin.

Modified chlorinated polyolefins include chlorinated polyolefins modified with an acid or anhydride group. Modified chlorinated polyolefin resin can be prepared by grafting, for example, by free radical grafting, one or more compounds selected from unsaturated polycarboxylic acids and the corresponding acid anhydrides onto a chlorinated polyolefin resin to form an acid- and/or anhydride-modified chlorinated polyolefin resin. Examples of modified chlorinated polyolefins are described in U.S. Patent Nos. 4,997,882 (column 1, line 26 to column 4, line 63); 5,319,032 (column 1, line 53 to column 2, line 68); and 5,397,602 (column 1, line 53 to column 2, line 68), . A chlorinated polyolefin can have a chlorine content ranging from 10 weight percent to 40 weight percent, and in certain embodiments, ranging from 10 weight percent to 30 weight percent based on the weight of polyolefin, i.e., the unchlorinated polyolefin. Examples of modified chlorinated polyolefins include modified chlorinated polyolefins having a chlorine content ranging from 10 weight percent to 30 weight percent based on the total weight of polyolefin, at least partially neutralized with an amine, and characterized by an acid value ranging from 50 to 100. Further examples of modified chlorinated polyolefins include aqueous dispersions comprising water, a coalescing solvent, and a dispersed resinous phase ranging from 20 weight percent to 100 weight percent of an at least partially neutralized modified chlorinated polyolefin obtained by heating chlorinated polyolefin with a hydrocarbon acid having at least 7 carbon atoms in the presence of a free radical initiator. Such modified chlorinated polyolefins can be present in an amount ranging from 20 weight percent to 100 weight percent of the dispersion in water with an organic cosolvent.

For use in the compositions and methods disclosed herein, a chlorinated polyolefin can be selected from a commercially available formulation such as for example, chlorinated polyolefin 343-1, 343-3, and 515-2 available from Eastman Kodak (Kingsport, TN). In certain embodiments, the chlorinated polyolefin resin can be obtained as a solution. For example, in certain embodiments, the chlorinated polyolefin can comprise a 24 weight percent solution of grafted acrylic chlorinated polyolefin (40 weight percent grafted acrylic component, and 60 weight percent chlorinated polyolefin component) in xylenes such as RC-63-3885 (PRC-DeSoto International, Inc.).

A chlorinated polyolefin can be provided as an aqueous- or solvent-based dispersion.

A surface can comprise, for example, a coating, a metallic substrate, a polymeric substrate, and combinations thereof. A coating can include an aged coating, or a coating that has been exposed by stripping overlying coatings, and can include primer coatings and topcoats such as polyurethane topcoats. In certain embodiments, the surface can be the surface of an aviation or aerospace vehicle, or a coating disposed on the surface of an aviation or aerospace vehicle. In certain embodiments, the surface can be a polyurethane substrate.

In certain embodiments of the invention, a composition comprising at least one chlorinated polyolefin can be used as a tie coat to provide enhanced adhesion between an underlying surface and a topcoat. As used herein, tie coat refers to an intermediate coating intended to facilitate or enhance adhesion between an underlying surface, which is according to the invention an aged coating, and an overlying topcoat. When used as a tie coat, a composition comprising at least one chlorinated polyolefin can be dispersed in an aqueous or nonaqueous solvent. The chlorinated polyolefin composition can comprise any appropriate chlorinated polyolefin, including, for example, any of the chlorinated polyolefins disclosed herein. In certain embodiments, the solvent can be a volatile aprotic organic solvent such as xylene, toluene, diisobutylacetate, isobutylacetate, methoxypropanol acetate, and the like, and mixtures thereof. In certain embodiments, a chlorinated polyolefin containing tie coat composition can comprise from 1 weight percent to 24 weight percent of at least one chlorinated polyolefin, and in certain embodiments can comprise from 5 weight percent to 10 weight percent of at least one chlorinated polyolefin based on the total weight of the dispersion (solids and solvent content). In certain embodiments, more than one coating of a chlorinated polyolefin containing tie coat dispersion can be applied to a surface. In certain embodiments, the more than one tie coat layer can be applied from a composition having the same or different weight percent of chlorinated polyolefins, and/or can comprise a different chlorinated polyolefin as other tie coat layers. Previously applied tie coats can be dried prior to application of subsequently applied coatings, including additional tie coats and/or topcoats.

Prior to application of a tie coat comprising at least one chlorinated polyolefin to a surface, the surface can be treated by any method capable of removing particulates and surface films. For example, in certain embodiments, the surface can be solvent wiped using a lint free fabric retaining a volatile solvent such as ethanol, methanol naptha, mineral spirits, methyl isobutyl ketone, methyl ethyl ketone, acetone, or other suitable solvents. In certain embodiments, a commercially available cleaning solvent such as DESOCLEAN 120 (PRC-DeSoto International, Inc.) can be used. The surface is not mechanically abraded prior to or following application of the tie coat to the aged surface. A chlorinated polyolefin containing tie coat can be applied by any appropriate method depending at least in part on the solvent and weight percent of the chlorinated polyolefin containing tie coat dispersion. For example, a chlorinated polyolefin containing tie coat can be applied by brushing, spraying, dipping, rolling, flowing, and the like. Spraying methods include compressed air spray and electrostatic spray, and include manual and automatic methods.

In certain embodiments, the dry film thickness of a tie coat comprising a chlorinated polyolefin containing tie coat applied to the substrate can range from 0.05 mils to 1 mil, and in certain embodiments, can range from 0.05 mils to 0.5 mils.

Following application of the chlorinated polyolefin tie coat to a surface, the tie coat is dried. The tie coat can be dried for a period of time sufficient to evaporate the solvent carrier and for the tie coat to develop adequate adhesion characteristics. The time to dry a particular tie coat can depend, at least in part, on the amount of solvent applied, the thickness of the tie coat, the vapor pressure of the solvent, the temperature and humidity, and the airflow at the surface. A tie coat develops adequate adhesion characteristics when a topcoat applied over the tie coat passes a dry adhesion test. For example, a tie coat develops adequate adhesion when a topcoat applied over the tie coat passes the parallel 45-degree scribe test according to BSS 7225 specification, after the top coat has been cured from 1 hour at room temperature. In certain embodiments, a tie coat can be dried for a time ranging from 5 minutes to 24 hours, with adequate adhesion characteristics generally being realized in less than 2 hours.

After the chlorinated polyolefin containing tie coat is dry and has developed adequate adhesion characteristics, one or more curable polyurethane topcoats including, for example, any of those disclosed herein, can be applied to the tie coat. A curable polyurethane topcoat can be applied after the tie coat develops adequate adhesion which can be from 5 minutes to 24 hours following application of the tie coat. In certain embodiments, the curable polyurethane topcoat can be applied to the tie coat within 48 hours after the tie coat is applied.

In certain embodiments, a polyurethane topcoat can include any appropriate curable polyurethane topcoat including the polyurethane topcoats comprising a chlorinated polyolefin disclosed herein. A curable polyurethane topcoat can be applied to the tie coat using any appropriate coating method as disclosed herein. Each of the one or more polyurethane topcoats can be applied to any appropriate dry film thickness. For example, in certain embodiments the dry film thickness of a polyurethane topcoat can range from 0.25 mils to 5 mils, in certain embodiments from 0.5 mils to 4 mils, and in certain embodiments from 0.5 to 2 mils. A curable polyurethane topcoat can be cured according to recommended procedures, including at ambient temperature.

Adhesion of a polyurethane topcoat and chlorinated polyolefin tie coat can be determined by any appropriate method. For example, adhesion can be determined using the Dry Adhesion Test, 7-Day Wet Adhesion Test, and/or 36-Day Wet Adhesion Test according to BSS 7225 (Boeing Specification Support Standard). The Whirling Arm Rain Erosion Resistance Test can also be used to evaluate the adhesion characteristics of the coatings. The foregoing test methods are described herein.

### Examples

Certain embodiments can be further defined by reference to the following examples, which describe in detail methods of refinishing an aged surface and compositions comprising at least one chlorinated polyolefin. It will be apparent to those skilled in the art that many modifications, both to materials and methods, can be practiced without departing from the embodiments.

### Adhesion Tests

The adhesion of the interlayers and topcoats disclosed herein were evaluated using dry adhesion, wet adhesion, and whirling arm rain erosion resistance test methods.

The adhesion of polyurethane coatings disclosed herein was evaluated using the procedures described in BSS 7225 (Boeing Specification Support Standard). In the Dry Adhesion Test (Type I) test, specimens were scribed with a stylus, for example, to produce two parallel scribes separated by 1 inch, and a single scribe intersecting the parallel scribes at an angle of 45 ± 5 degrees (BSS 7225, Parallel Plus 45 Degree Scribes - Class 3). A 1-inch wide masking tape having rubber or acrylic adhesive with a minimum peel strength of 60 oz/inch width when tested in accordance with ASTM D 330, Method A, was pressed onto the surface of the scribed test specimen perpendicular to the parallel scribes and covering the 45 degree scribe in the region between the parallel scribes. In a single abrupt motion, the tape was pulled perpendicular to the test specimen. The tested area and the tape were then examined for any removed coating. A coating that passed the adhesion test exhibited no, or very slight, loss of coating beyond the scribes, as indicated by classifications 10 and 9, respectively, in BSS 7225. Classification 10 corresponds to no loss of paint along the scribes, and classification 9 corresponds to very slight loss of paint beyond the scribes. Adhesion failure was indicated for results corresponding to classifications 8 through 1 as defined in BSS 7225.

The wet adhesion of the interlayer and top coats was evaluated using the procedure described in BSS 7225, Wet Adhesion, Immersion Method (Type III). Test specimens were immersed in distilled water for either 7 days or 36 days. At the end of the specified time, the test specimens were removed from the water, wiped dry, and the adhesion of the coating evaluated as described for the dry adhesion test.

The adhesion of the interlayers and topcoats was also evaluated using the Whirling Arm Rain Erosion Resistance Test. Aluminum 2024-T3 test panels in the shape of a curved foil with dimensions of 3 inches x 6 inches x 0.032 inches were pretreated with a chromate conversion coating according to MIL-C-5541 Class 1A. Test panels were then solvent wiped and dried prior to application of coatings. After the coatings were applied and dried, the test panels were immersed in water at 25 °C for 16 to 24 hours prior to testing. Within one hour after removal from the water, the test panels were secured to a whirling arm fixture. The specimens were then exposed to 385 mile per hour, 3 to 4 inch per hour water spray, characterized by a 1 to 4 mm drop size, for 30 minutes. Failure was indicated when any coating peeled more than 0.25 inches from the leading edge of the test panel. **Example 1** outside the claimed invention

### Adhesion of a Polyurethane Topcoat Comprising a Grafted Acrylic Chlorinated Polyolefin to an Aged Polyurethane Coating

A RC-63-3885 grafted acrylic chlorinated polyolefin dispersion (PRC-DeSoto International, Inc.) was added to CA 8000 polyurethane topcoat (PRC-DeSoto International) in amounts ranging from 2.5 weight percent to 5 weight percent based on the total weight of the solids content of the polyurethane/chlorinated polyolefin composition. RC-63-3885 is a solution of 24 weight percent grafted acrylic chlorinated polyolefin dispersed in xylenes. Aluminum alloy 2024 T-3 test panels were first coated with CA 8000. To age the polyurethane coating, the test panels were either cured for at least 7 days at ambient temperature (25°C), or exposed to an accelerated aging regimen of 68°C for 14 days. The cured coatings were then cleaned using a methylethyl ketone or DESOCLEAN 120 wipe. A topcoat comprising the RC-63-3885 chlorinated polyolefin dispersion and CA 8000 polyurethane was spray coated over the aged polyurethane coating.

Results of tests performed on test panels that were baked at a temperature of 110°C (230 °F) for either 4 or 24 hours are presented in Table 1.

**Table 1. Polyurethane Topcoat Comprising Chlorinated Polyolefin**

| Sample | Weight Percent Chlorinated Polyolefin | Method of cleaning topcoat | Dry Adhesion (BSS 7225) | Wet Adhesion 7 days (BSS 7225) | Wet Adhesion 36 days (BSS 7225) |
|---|---|---|---|---|---|
| 1A | 0% | MEK wipe | Pass | Fail | - |
| 1B | 2.5% | MEK wipe | Pass | Pass | - |
| 1C | 2.5% | No cleaning | Pass-10 | Pass-9 | Pass-9 |
| 1D | 2.5% | DESOCLEAN 120 | Pass-10 | Pass-10 | Pass-10 |
| 1E | 2.5% | MEK wipe | Pass-10 | Pass-10 | Pass-10 |
| 1F | 3% | MEK wipe | Pass-10 | Pass-10 | Pass-10 |
| 1G | 3.5% | MEK wipe | Pass-10 | Pass-10 | Pass-9 |
| 1H | 4% | MEK wipe | Pass-10 | Pass-10 | Pass-9 |
| 1I | 4.5% | MEK wipe | Pass-10 | Pass-10 | Pass-9 |
| 1J | 5% | MEK wipe | Pass-10 | Pass-9 | Pass-10 |

Results of tests performed on test panels which were baked at a temperature of 110°C (230 °F) for either 4 or 24 hours are presented in Table 2.

**Table 2. Polyurethane Topcoat Comprising Chlorinated Polyolefin**

| Sample | Time Baked at 230 °F | Weight. Percent Chlorinated Polyolefin | Method of cleaning topcoat | Dry Adhesion (BSS 7225) | Wet Adhesion 7 days (BSS 7225) |
|---|---|---|---|---|---|
| 2A | 4 hrs | 0% | MEK wipe | Fail | Fail |
| 2B | 24 hrs | 0 % | MEK wipe | Fail | Fail |
| 2C | 4 hrs | 2.5% | MEK wipe | Pass | Pass |
| 2D | 24 hrs | 2.5% | MEK wipe | Pass | Pass |
| 2E | 4 hrs | 5% | MEK wipe | Pass | Pass |
| 2F | 24 hrs | 5% | MEK wipe | Pass | Pass |

### Example 2 according to the Invention

### Adhesion of a Polyurethane Topcoat and a Tie comprising a Chlorinated Polyolefin to an Aged Polyurethane Coating

RC-63-3885 chlorinated polyolefin dispersion comprising a 24 weight percent solution of grafted acrylic chlorinated polyolefin in xylenes was diluted in D866 (PRC-DeSoto International, Inc.) to provide tie coat compositions having from 5 weight percent to 24 weight percent chlorinated polyolefins. D866 is a solvent mixture of SOLVESSO 100 (35% by volume), xylem (10% by volume), isobutyl acetate (22% by volume), and butyl acetate (35% by volume). Aluminum 2024-T3 test panels were first coated with a CA 8000 polyurethane coating and cured at 120 °F for 6 hours, or for 7 days at 24 °C (75 °F). The polyurethane coatings were allowed to set for a minimum of 30 days at 24 °C (75 °F) to age the coatings. The aged polyurethane coatings were then treated using a methylethyl ketone (MEK) solvent wipe. Tie coat compositions comprising 5 weight percent to 24 weight percent chlorinated polyolefin were spray coated over the treated, aged polyurethane coatings. The dried film thickness of the tie coat ranged from 0.05 mils to 0.5 mils. The tie coats were then dried at 25 °C for times ranging from 20 minutes to 48 hours. After drying, a CA 8000 polyurethane topcoat was applied over the chlorinated polyolefm tie coats to produce a topcoat having a dry film thickness of 0.5 mils to 4 mils.

Dry adhesion, wet adhesion, and whirling arm rain erosion resistance testing was performed as described herein. Results are presented in Table 3.

**Table 3. Tie Coat Comprising Chlorinated Polyolefins**

| Sample | Weight Percent Chlorinated Polyolefin | Method of Cleaning | Dry Time (hr) | Dry Adhesion (BSS 7225) | Wet Adhesion 7 days (BSS 7225) |
|---|---|---|---|---|---|
| 3A | 24% | MEK wipe | 0.5 | Pass | Pass |
| 3B | 24% | MEK wipe | 0.3 | Pass | Pass |
| 3C | 24% | MEK wipe | 1 | Pass | Pass |
| 3D | 24% | MEK wipe | 4 | Pass | Pass |
| 3E | 24% | MEK wipe | 2.5 | Pass | Pass |
| 3F | 20 % | MEK wipe | 0.3 | Pass | Pass |
| 3G | 20 % | MEK wipe | 1 | Pass | Pass |
| 3H | 20 % | MEK wipe | 1 | Pass | Pass |
| 3I | 15 % | MEK wipe | 0.3 | Pass | Pass |
| 3J | 15 % | MEK wipe | 4 | Pass | Pass |
| 3K | 15 % | MEK wipe | 4 | Pass | Pass |
| 3L | 10 % | MEK wipe | 0.3 | Pass | Pass |
| 3M | 5% | MEK wipe | 0.3 | Pass | Pass |

## Claims

1. A method of refinishing an aged coating comprising:
applying a tie coat comprising at least one chlorinated polyolefin to the aged Coating;
drying the tie coat;
applying a curable polyurethane topcoat to the tie coat; and
curing the curable polyurethane topcoat,
wherein the aged surface is not mechanically abraded prior to application of the tie coat.

2. The method of claim 1, wherein the tie coat is applied from a dispersion comprising from 1 weight percent to 24 weight percent of the at least one chlorinated polyolefin based on the total weight of the dispersion.

3. The method of claim 1 wherein the tie coat is applied from a dispersion comprising from 5 weight percent to 10 weight percent of the at least one chlorinated polyolefin.

4. The method of claim 1, wherein the dry film thickness of the tie coat ranges from 0.05 mils to 1 mil.

5. The method of claim 1, wherein the dry film thickness of the tie coat ranges from 0.05 mils to 0.5 mils.

6. The method of claim 1, wherein the tie coat provides enhanced adhesion between the polyurethane topcoat and the aged surface compared to adhesion between the same polyurethane topcoat and the aged surface without the tie coat.

7. The method of claim 1, wherein the refinished surface passes the whirling arm rain erosion resistance test according to BSS 7225 specification.

8. The method of claim 1, wherein the curable polyurethane topcoat is applied from a two-component polyurethane coating composition.

9. The method of claim 1, wherein the at least one chlorinated polyolefin comprises a grafted acrylic chlorinated polyolefin.

10. The method of claim 9, wherein the amount of the grafted acrylic component in the grafted acrylic chlorinated polyolefin ranges from 10 weight percent to 90 weight percent of the total weight of the grafted acrylic chlorinated polyolefin.

11. The method of claim 9, wherein the amount of the grafted acrylic component in the grafted acrylic chlorinated polyolefin ranges from 30 weight percent to 60 weight percent of the total weight of the grafted acrylic chlorinated polyolefin.

12. The method of claim 1, wherein the aged surface is wiped with a solvent prior to application of the tie coat.

13. The method of claim 1, wherein the aged surface comprises an aged polyurethane coating.

14. The method of claim 13, wherein the aged polyurethane coating is disposed on a surface of an aviation or aerospace vehicle.

15. The method of claim 1, wherein the aged surface comprises an aged polyurethane substrate.

## Patentansprüche

1. Verfahren zum Nacharbeiten einer gealterten Beschichtung, umfassend:
Aufbringen einer Bindeschicht, enthaltend wenigstens ein chloriniertes Polyolefin, auf die gealterte Beschichtung,
Trocknen der Bindeschicht,
Aufbringen einer härtbaren Polyurethandeckschicht auf die Bindeschicht
und
Härten der härtbaren Polyurethandeckschicht,
wobei die gealterte Beschichtung vor dem Auftragen der Bindeschicht nicht mechanisch angeschliffen wird.

2. Verfahren nach Anspruch 1, wobei die Bindeschicht aus einer Dispersion enthaltend 1 Gew.-% bis 24 Gew.-% des wenigstens einen chlorinierten Polyolefins bezogen auf das Gesamtgewicht der Dispersion, aufgebracht wird.

3. Verfahren nach Anspruch 1, wobei die Bindeschicht aus einer Dispersion enthaltend 5 Gew.-% bis 10 Gew.-% des wenigstens einen chlorinierten Polyolefins, aufgebracht wird.

4. Verfahren nach Anspruch 1, wobei die Dicke des trockenen Films der Bindeschicht von 1,27 µm bis 25,4 µm (0,05 mil bis 1 mil) beträgt.

5. Verfahren nach Anspruch 1, wobei die Dicke des trockenen Films der Bindeschicht von 1,27 µm bis 12,7 µm (0,05 mil bis 0,5 mil) beträgt.

6. Verfahren nach Anspruch 1, wobei die Bindeschicht erhöhte Haftung zwischen der Polyurethandeckschicht und der gealterten Beschichtung im Vergleich zu der Haftung zwischen derselben Polyurethandeckschicht und der gealterten Beschichtung ohne die Bindeschicht bereitstellt.

7. Verfahren nach Anspruch 1, wobei die nachgearbeitete Beschichtung den "Whining Arm Rain Erosion Resistance Test" gemäß BSS 7225 Spezifikation besteht.

8. Verfahren nach Anspruch 1, wobei die härtbare Polyurethandeckschicht aus einer Zweikomponenten-Polyurethanbeschichtungszusammensetzung aufgebracht wird.

9. Verfahren nach Anspruch 1, wobei das wenigstens eine chlorinierte Polyolefin ein gepfropftes acrylisches chloriniertes Polyolefin umfasst.

10. Verfahren nach Anspruch 9, wobei die Menge der gepfropftes acrylischen Komponente in dem gepfropftes acrylischen chlorinierten Polyolefin 10 Gew.-% bis 90 Gew.-% des Gesamtgewichts des gepfropftes acrylischen chlorinierten Polyolefins ausmacht.

11. Verfahren nach Anspruch 9, wobei die Menge der gepfropftes acrylischen Komponente in dem gepfropftes acrylischen chlorinierten Polyolefin 30 Gew.-% bis 60 Gew.-% des Gesamtgewichts des gepfropftes acrylischen chlorinierten Polyolefins ausmacht.

12. Verfahren nach Anspruch 1, wobei die gealterte Beschichtung vor Aufbringen der Bindeschicht mit einem Lösungsmittel abgewischt wird.

13. Verfahren nach Anspruch 1, wobei die gealterte Beschichtung eine gealterte Polyurethanbeschichtung umfaßt.

14. Verfahren nach Anspruch 13, wobei die gealterte Polyurethanbeschichtung auf einer Oberfläche eines Flugzeuges oder Raumfahrzeuges aufgetragen ist.

## Revendications

1. Procédé de retouche d'un revêtement vieilli, comprenant :
l'application d'un revêtement liant comprenant au moins une polyoléfine chlorée sur le revêtement vieilli ;
le séchage du revêtement liant;
l'application d'un revêtement supérieur de polyuréthane durcissable au revêtement liant ; et
le durcissement du revêtement supérieur de polyuréthane durcissable, dans lequel la surface vieillie n'est pas mécaniquement abrasée avant l'application du revêtement liant.

2. Procédé selon la revendication 1, dans lequel le revêtement liant est appliqué à partir d'une dispersion comprenant de 1 pour cent en poids à 24 pour cent en poids de ladite polyoléfine chlorée, sur la base du poids total de la dispersion.

3. Procédé selon la revendication 1, dans lequel le revêtement liant est appliqué à partir d'une dispersion comprenant de 5 pour cent en poids à 10 pour cent en poids de ladite polyoléfine chlorée.

4. Procédé selon la revendication 1, dans lequel l'épaisseur du film sec du revêtement liant est comprise entre 1,27 µm et 25,4 µm (0,05 mils et 1 mil).

5. Procédé selon la revendication 1, dans lequel l'épaisseur de film sec du revêtement liant est comprise entre 1,27 µm et 12,7 µm (0,05 mils et 0,5 mils).

6. Procédé selon la revendication 1, dans lequel le revêtement liant fournit une meilleure adhésion entre le revêtement supérieur de polyuréthane et le revêtement vieilli, par rapport à l'adhésion obtenue entre le même revêtement supérieur de polyuréthane et le revêtement vieilli sans le revêtement liant.

7. Procédé selon la revendication 1, dans lequel le revêtement retouché réussit le test de résistance à l'érosion par la pluie avec bras tournant, selon la spécification BSS 7225.

8. Procédé selon la revendication 1, dans lequel le revêtement supérieur de polyuréthane durcissable est appliqué à partir d'une composition de revêtement de polyuréthane à deux composants.

9. Procédé selon la revendication 1, dans lequel ladite polyoléfine chlorée comprend une polyoléfine chlorée acrylique greffée.

10. Procédé selon la revendication 9, dans lequel la quantité de composant acrylique greffé dans la polyoléfine chlorée acrylique greffée est comprise entre 10 pour cent en poids et 90 pour cent en poids du poids total de la polyoléfine chlorée acrylique greffée.

11. Procédé selon la revendication 9, dans lequel la quantité de composant acrylique greffé dans la polyoléfine chlorée acrylique greffée est comprise entre 30 pour cent en poids et 60 pour cent en poids du poids total de la polyoléfine chlorée acrylique greffée.

12. Procédé selon la revendication 1, dans lequel le revêtement vieilli est essuyée avec un solvant avant l'application du revêtement liant.

13. Procédé selon la revendication 1, dans lequel le revêtement vieilli comprend un revêtement de polyuréthane vieilli.

14. Procédé selon la revendication 13, dans lequel le revêtement de polyuréthane vieilli est disposé sur une surface d'un véhicule aérien ou aérospatial.
